# EUROPEAN PATENT SPECIFICATION

(11) **EP 0 845 381 B1**
(45) Date of publication and mention of the grant of the patent: **19.09.2001**
(21) Application number: 97120889.7
(22) Date of filing: 27.11.1997
(51) Int. Cl.: B60K 26/00, B60K 41/20

(54) **Improvements to a control device for the accelerator and for an apparatus of the drive system of a commercial vehicle**
Verbesserungen an der Gaspedal- Steuervorrichtung und an einer weiteren Steuervorrichtung des Antriebssystem eines Nutzfahrzeuges
Perfectionnements apportés à un dispositif de commande d'accélérateur et à un autre dispositif de commande du système de propulsion d'un véhicule utilitaire

(30) Priority: 29.11.1996 IT TO960971
(43) Date of publication of application: 03.06.1998
(73) Proprietor: IVECO FIAT S.p.A., 10156 Torino (IT)
(72) Inventor: Riva, Vittorio, 10100 Torino (IT)
(74) Representative: Jorio, Paolo

(56) References cited:
- EP-A- 0 495 641
- DE-U- 9 206 242
- US-A- 5 241 936

## Description

The present invention relates to improvements to a control device for the accelerator and for an apparatus of the drive system of a commercial vehicle.

It is known that in modern commercial vehicles the accelerator control is connected to the control of an apparatus of the drive system, for example the engine brake or the automatic gearbox, in such a way that when the accelerator control is in a predetermined position said apparatus automatically becomes operative. Normally, the accelerator is controlled by way of a potentiometer which is caused to rotate by acting on the conventional lever of the accelerator pedal, whereas the apparatus is actuated by means of a microswitch actuated by said lever.

In known devices of the aforementioned type a potentiometer of the accelerator is caused to rotate via toothed sector-pinion pair. The toothed sector, which is attached to a pedal lever, is pivoted on a frame mounted in a container and it engages in a pinion angularly coupled to a potentiometer slide. Additionally, the frame supports a microswitch for controlling the apparatus, which is acted upon by means which can be adjusted with respect to the sector.

In a known device of the aforementioned type a microswitch is acted upon by an adjusting screw retained in a position set by a pair of nuts. These nuts can be turned only after the device has been dismounted and the frame removed from the container so that adjustment involves a considerable amount of time being lost.

In another known device, the microswitch is acted upon by a cam which can be adjusted angularly on a spindle attached to the sector. The cam is adjusted, without dismounting the frame from the container, by means of a screwdriver, through suitable openings provided in the frame and in the sector. However, this device requires a large number of components and, therefore it is relatively expensive to manufacture.

Moreover, both the known devices have a problem in respect of the take-up of play between the adjustable means for actuating the microswitch and the pinion for actuating the potentiometer slide. Finally, because of the different coefficient of thermal expansion in the various members for transmitting motion between the actuating means and the slide, it is not possible to ensure efficient adjustment of the device as the temperature varies.

From document EP-A-0 495 641, which is the relevant state of the art with respect to novel by according Art. 54(2) EPC (preamble of claim 1), it is also known a control device for the accelerator and for an idle validation switch. The potentiometer is carried by the treadle of the accelerator, and the slide of the potentiometer is secured to an arm pivotally mounted on the treadle. A spring, provided between the treadle and the arm, urges the arm away of the treadle as to contact the base. The validation switch is secured to the treadle and is operated by a cam surface carried by an adjusting screw, which is installed in a threaded bore radial with respect to the pivot of the arm.

The object of the invention is to devise a control device of the motor vehicle, which is of optimum simplicity and economy and in which the effect of the variation in the temperature on the control of the apparatus is substantially reduced, thereby eliminating the aforementioned drawbacks of the above-mentioned known devices.

According to the invention, this object is achieved by a control device for the accelerator and for an apparatus of the drive system of a commercial vehicle, comprising a slide of a potentiometer controlling the metering of fuel, said slide being mounted on a support for rotating around a rotation axis, a control member movably mounted on a frame and adapted to rotate said slide, said frame being mounted on said support, and a control element for said apparatus carried by said support and operable by adjustable means comprising an adjustable screw, characterized in that said support is fixed, said adjustable screw being carried by an extension secured to said slide, said extension extending radially with respect, and parallelly to said rotation axis, whereby said adjustable screw can be adjusted independently of said control member.

With a view to a better understanding of the invention a preferred embodiment will now be described by way of example with reference to the accompanying drawings, wherein:
Figure 1 is a side view, partly in section, of a control device for the accelerator and for the engine brake, according to the invention;
Figure 2 is a partial view, in perspective and exploded, of the components disposed on a frame of the control device;
Figure 3 is a front view taken along the line III-III in Figure 1, on an enlarged scale, in a particular operating position;
Figure 4 is a side view of Figure 3.

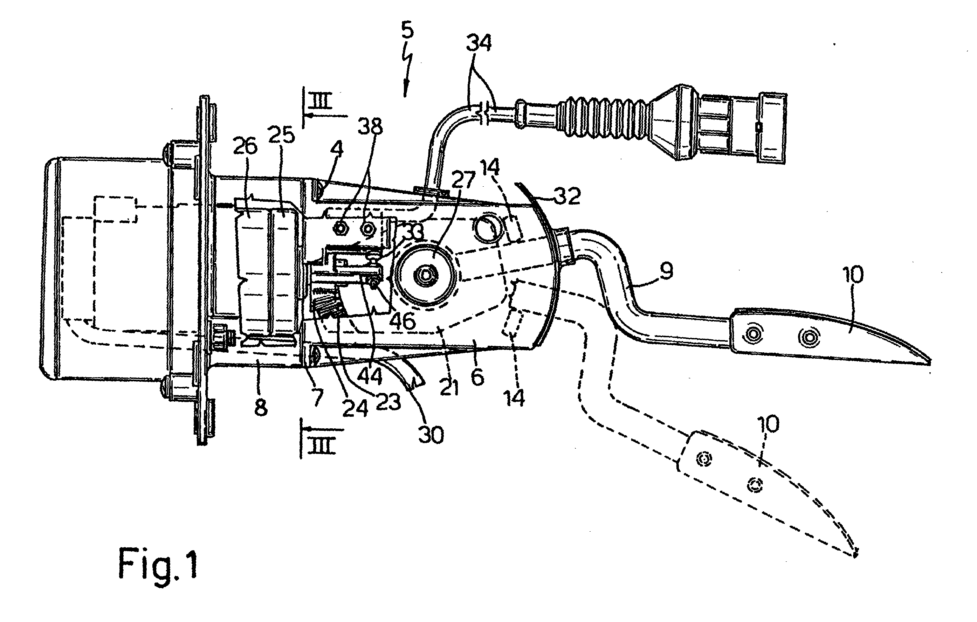

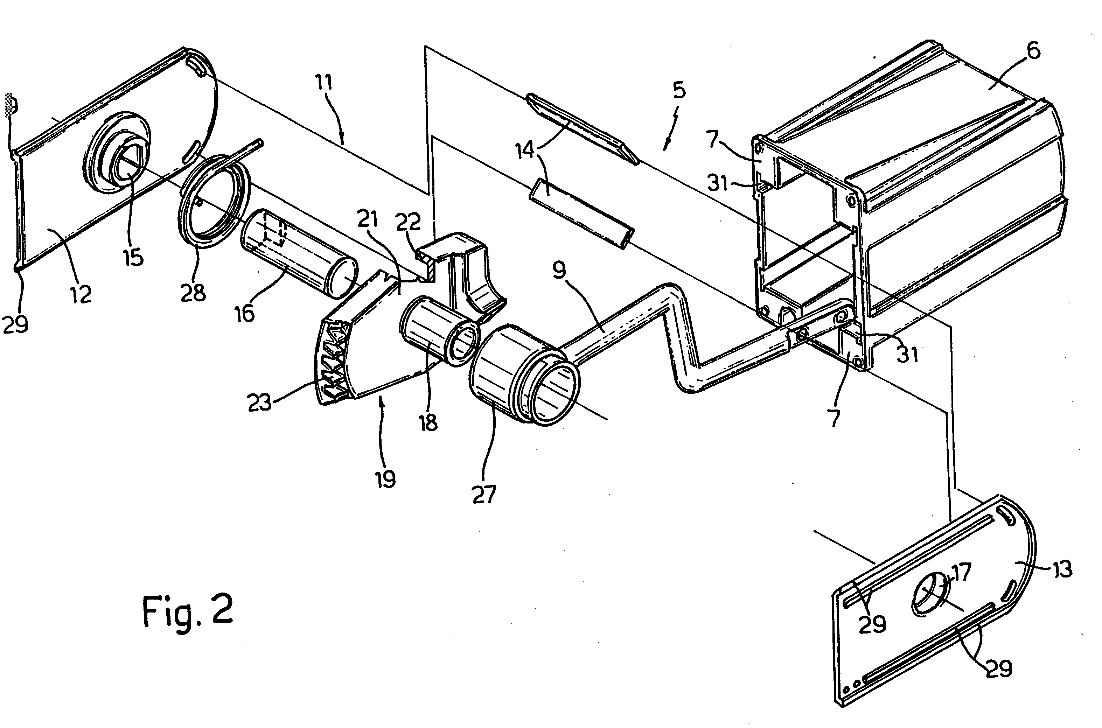

Referring now to Figure 1, the reference numeral 5 generally denotes a control device for the accelerator and for the engine brake of a commercial vehicle. The device 5 comprises a container 6 of substantially parallelepipedal shape. The container 6 (Figure 2) is open on one side, where there are provided perforated fins 7 which are adapted to be secured to a fixed support 8 by means of screws 4 (Figure 1). The container 6 is provided with a vertical opening, through which passes a lever 9 carrying a conventional accelerator pedal 10.

The lever 9 is pivoted on a fixed frame, generally denoted by the reference numeral 11 (Figure 2), which is formed by two sides 12 and 13 which are connected by a pair of cross members. In particular, the side 12 is provided with a hole 15, the rim of which has a flat zone, and which is keyed one end of a pin 16. The side 13 is provided with another hole 17, in which the other end of the pin 16 engages.

In operation, the cross members 14 serve as stop members for the lever 9 in both directions. In particular the upper position, indicated in solid line in Figure 1, corresponds to the fully released position of the lever 9, whereas the lower position, indicated in dashed line, corresponds to the position of maximum acceleration.

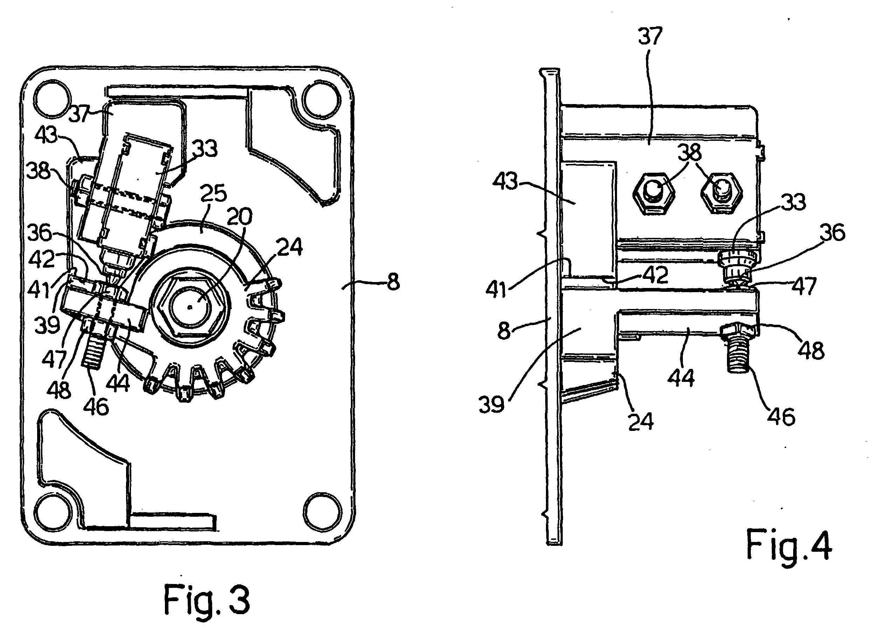

A sleeve 18 (Figure 2) is mounted to rotate on the pin 16 and is formed integrally with a control member 19 of the accelerator, which comprises a plate 21 perpendicular to the axis of the sleeve 18. The plate 21 (Figure 2) is in the shape of two trapezia having their principal base in common and the sides of which are provided with a bent edge 22. The plate 21 ends at the front in a toothed sector 23 adapted to engage a pinion 24 (Figures 1 and 3) fixed on a pin 20. The latter is mounted to rotate on the support 8 and, in addition, is fixed on a conventional slide 25 of a potentiometer 26, which via an electric wire 30 controls metering of the fuel in a known manner.

The lever 9 is secured to a sleeve 27 keyed in known manner on the sleeve 18 (Figure 2). A helical torsion spring 28 urges the lever 9 in an anticlockwise direction. The lever 9 is additionally provided with a conventional seal 32 (Figure 1) arranged in alignment with the vertical opening of the container 6. Each of the two sides 12 and 13 of the frame 11 is provided with two pairs of parallel ribs 29 adapted to be accommodated in two corresponding grooves 31 in the container 6. The frame 11 is secured in known manner in the container 6 in an adjustable longitudinal position.

Furthermore, the control device 5 comprises a control element for the engine brake, formed by a microswitch 33. The latter is connected electrically, via a wire 34, with a conventional control device for an engine brake and comprises a push-button 36 (Figure 3) which prevents operation of the engine brake for as long as it is depressed. In a known manner, the push-button 36 is actuated by rotating the accelerator lever 9. It has to be acted upon when the motor vehicle requires operation of the drive engine, generally a diesel cycle engine, or when the fuel supply to the engine exceeds a preset minimum for keeping the engine in operation.

According to the invention, the microswitch 33 is accommodated in a body 37, to which it is secured by means of two screws with nuts 38 (see Figure 4); said body 37 is advantageously formed integrally with the support 8.

The pinion 24 has an extension 39 having a reference surface 41 disposed radially with respect to the axis of the pin 20. The surface 41 is adapted to come to a stop against a stop member formed by a surface 42 of an extension 43 of the body 37. Therefore, the surface 42 is formed integrally with the support 8 and is also disposed radially with respect to the axis of the pin 20.

The extension 39 of the pinion 24 is further provided with a bracket 44 extending parallel to the pin 20 and carrying adjustable means for actuating the push-button 36 of the microswitch 33. Said adjustable means comprise a screw 46 having a head 47 of prismatic shape, which is adapted to act on the push-button 36. The adjustable means also comprise a lock nut 48 for the screw 46. The latter is adjusted on the bracket 44 so that the head 47 acts on the push-button 36 in alignment with a predetermined position of the slide 25, and therefore of the pinion 24, which corresponds to a preset minimum fuel supply.

In particular, this adjustment is carried out before the container 6 is secured with the frame 11 to the support 8 and, therefore, independently of the sector 23. After the surface 41 of the extension 39 has come into abutment with the surface 42 of the body 37, the screw 46 is turned until the pinion 24, and therefore also the slide 25, is brought into the predetermined position in which the actuation of the push-button 36 of the microswitch 33 has to be commenced. Finally, the screw 46 is secured in a position set by means of the nut 48.

It is evident from the foregoing that the control member 21 can be moved on the frame 11 and is adapted to actuate the slide 25 of the potentiometer 26 secured to the support 8, on which the frame 11 is mounted, and that adjustable means 46-48 are provided which are connected to the slide 25 to actuate the element 33 also secured to the support 8.

Furthermore, the advantages of the control device according to the invention with respect to the known devices are apparent. In fact, the actuation of the microswitch 33 by way of the adjustable means 46-48 takes place without any intermediate member for transmitting motion with respect to the slide 25, thereby bringing about a substantial reduction in the cost of the device. Additionally, on the one hand, play between the parts is obviated, as is the necessity to take up this play, and, on the other hand, misadjustment phenomena caused by variations in the temperature of the control device, as a result of different coefficients of expansion of the various components, are prevented.

It is evident that the control device described can be subject to various modifications and improvements without departing from the scope of protection of the claims. For example, the container 6 can be provided with an opening to allow adjustment of the screw 46 after the container 6 has been secured to the support 8. Furthermore, the sector 23 and the pinion 24 can be replaced with other types of motion-transmitting means, and the slide 25 may be able to slide on the support 8, instead of rotating thereon.

Finally, it is obvious that the microswitch 33 can be used to control any other apparatus of the drive system of the motor vehicle, for example an automatic gearbox between the crankshaft and the drive shaft.

## Claims

1. A control device for the accelerator and for an apparatus of the drive system of a commercial vehicle, comprising a slide (25) of a potentiometer (26) controlling the metering of fuel, said slide (25) being mounted on a support (8) for rotating around a rotation axis, a control member (19) movably mounted on a frame (11) and adapted to rotate said slide (25), said frame (11) being mounted on said support (8), and a control element (33) controlling said apparatus carried by said support (8) and operable by adjustable means (46-48) comprising an adjustable screw (46), **characterized in that** said support (8) is fixed, said adjustable screw (46) being carried by an extension (39) secured to said slide (25), said extension (39) extending radially with respect to, and parallelly to said rotation axis, whereby said adjustable screw (46) can be adjusted independently of said control member (19).

2. A device according to claim 1, **characterized in that** said control member (19) comprises a toothed sector (23), and said slide (25) is attached to a pinion (24) engaging with said toothed sector (23), said extension (39) being provided on said pinion (24) and having a reference surface (41) adapted to stop against a stop member (43) formed integrally with said support (8).

3. A device according to claim 2, wherein said control element comprises a microswitch (33) provided with a push-button (36), **characterized in that** said adjustable screw (46) is provided with a head (47) adapted to act on said push-button (36).

4. A device according to claim 3, **characterized in that** said microswitch (33) is accommodated in a body (37) formed integrally with said support (8).

5. A device according to claim 4, **characterized in that** said stop member is formed by an extension (43) of said body (37) and comprises a surface (42) disposed radially with respect to said rotation axis, said reference surface (41) being also arranged radially with respect to said rotation axis.

## Patentansprüche

1. Steuervorrichtung für das Gaspedal und für eine weitere Vorrichtung des Antriebssystems eines Nutzfahrzeugs, mit :
einem Schlitten (25) eines Potentiometers (26), welcher die Dosierung von Brennstoff steuert, wobei der Schlitten (25) an einer Lagerung (8) für die Drehung um eine Drehachse herum angebracht ist,
einem Steuerungselement (19), welches beweglich an einem Rahmen (11) angebracht ist und den Schlitten (25) drehen kann, wobei der Rahmen (11) an der Lagerung (8) angebracht ist, und
einem Steuerungselement (33), welches die Vorrichtung steuert, welche durch die Lagerung (8) gehalten wird, und welches betätigbar ist durch einstellbare Mittel (46 bis 48) mit einer einstellbaren Schraube (46),
**dadurch gekennzeichnet, dass**
die Lagerung (8) feststehend ist und dass die einstellbare Schraube (46) durch eine Erweiterung (39) gehalten wird, die an dem Schlitten (25) angebracht ist, wobei sich die Erweiterung (39) radial bezüglich der Drehachse und parallel dazu erstreckt und wobei die einstellbare Schraube (46) unabhängig von dem Steuerungselement (19) eingestellt werden kann.

2. Vorrichtung nach Anspruch 1, **dadurch gekennzeichnet, dass** das Steuerungselement (19) einen gezahnten Abschnitt (23) aufweist und dass der Schlitten (25) an einem Zahnrad (24) angebracht ist, welches mit dem gezahnten Abschnitt (23) in Eingriff ist, wobei die Erweiterung (39) an dem Zahnrad (24) vorgesehen ist und eine Bezugsfläche (41) hat, welche gegen einen Anschlag (43) anschlagen kann, welcher integral mit der Lagerung (8) ausgeformt ist.

3. Vorrichtung nach Anspruch 2, wobei das Steuerungselement einen Mikroschalter (33) aufweist, welcher mit einem Druckknopf (36) versehen ist, **dadurch gekennzeichnet, dass** die einstellbare Schraube (46) mit einem Kopf (47) versehen ist, welcher auf den Druckknopf (36) einwirken kann.

4. Vorrichtung nach Anspruch 3, **dadurch gekennzeichnet, dass** der Mikroschalter (33) in einem Körper (37) untergebracht ist, welcher integral mit der Lagerung (8) ausgeformt ist.

5. Vorrichtung nach Anspruch 4, **dadurch gekennzeichnet, dass** der Anschlag mittels einer Erweiterung (43) des Körpers (37) ausgeformt ist und eine Fläche (42) aufweist, welche radial bezüglich der Drehachse angeordnet ist, wobei die Bezugsfläche (41) auch radial bezüglich dieser Rotationsachse angeordnet ist.

## Revendications

1. Dispositif de commande pour l'accélérateur et pour un dispositif du système d'entraînement d'un véhicule commercial, comprenant un curseur (25) d'un potentiomètre (26) commandant le dosage du carburant, ledit curseur (25) étant monté sur un support (8) destiné à tourner autour d'un axe de rotation, un élément de commande (19) monté d'une manière mobile sur un châssis (11) et adapté pour faire tourner ledit curseur (25), ledit châssis (11) étant monté sur ledit support (8), et un élément de commande (33) commandant ledit dispositif supporté par ledit support (8) et pouvant être activé par des moyens ajustables (46-48) comprenant une vis ajustable (46), **caractérisé en ce que** ledit support (8) est fixé, ladite vis ajustable (46) étant supportée par une extension (39) fixée sur ledit curseur (25), ladite extension (39) s'étendant radialement par rapport audit axe de rotation et ce parallèlement à ce dernier, de sorte que ladite vis ajustable (46) peut être ajustée indépendamment dudit élément de commande (19).

2. Dispositif selon la revendication 1, **caractérisé en ce que** ledit élément de commande (19) comprend un secteur denté (23)., et ledit curseur (25) est fixé à un pignon (24) venant en prise avec ledit secteur denté (23), ladite extension (39) étant agencée sur ledit pignon (24) et ayant une surface de référence (41) adaptée pour buter contre un élément d'arrêt (43) formé d'un seul tenant avec ledit support (8).

3. Dispositif selon la revendication 2, dans lequel ledit élément de commande comprend un micro-commutateur (33) comportant un bouton-poussoir (36), **caractérisé en ce que** ladite vis ajustable (46) comporte une tête (47) adaptée pour agir sur ledit bouton-poussoir (36).

4. Dispositif selon la revendication 3, **caractérisé en ce que** ledit micro-commutateur (33) est reçu dans un corps (37) formé d'un seul tenant avec ledit support (8).

5. Dispositif selon la revendication 4, **caractérisé en ce que** ledit élément d'arrêt est formé par une extension (43) dudit corps (37) et comprend une surface (42) disposée radialement par rapport audit axe de rotation, ladite surface de référence (41) étant aussi agencée radialement par rapport audit axe de rotation.
